Europäisches Patentamt

European Patent Office

Office européen des brevets

(19)

(11) Numéro de publication: **0 191 512 B1**

(12) **FASCICULE DE BREVET EUROPEEN**

(45) Date de publication du fascicule du brevet:
12.04.89

(51) Int. Cl.⁴: **C 01 D 7/37**

(21) Numéro de dépôt: **86200082.5**

(22) Date de dépôt: **20.01.86**

(54) **Procédé de fabrication de carbonate de sodium anhydre dense et carbonate de sodium anhydre dense obtenu par ce procédé.**

(30) Priorité: **30.01.85 FR 8501398**

(43) Date de publication de la demande:
**20.08.86 Bulletin 86/34**

(45) Mention de la délivrance du brevet:
**12.04.89 Bulletin 89/15**

(84) Etats contractants désignés:
**AT BE CH DE FR GB IT LI NL SE**

(56) Documents cités:
**BE-A- 410 886**
**GB-A- 2 024 187**
**US-A- 1 907 987**

(73) Titulaire: **SOLVAY & Cie (Société Anonyme), Rue du Prince Albert, 33, B-1050 Bruxelles (BE)**

(72) Inventeur: **Ninane, Léon, Rue Laennec, 1, F-54110 Dombasle-sur-Meurthe (FR)**
Inventeur: **Breton, Claude, Rue Pierre Breton, 5, F-54110 Dombasle-sur-Meurthe (FR)**

ACTORUM AG

## Description

L'invention concerne un procédé pour la fabrication de carbonate de sodium anhydre dense au départ de carbonate de sodium anhydre léger.

On cherche généralement à disposer, dans l'industrie, notamment en verrerie et en sidérurgie, de carbonate de sodium bien cristallisé, exempt de fines et présentant une bonne résistance à l'abrasion. A cet effet, le carbonate de sodium anhydre léger (appelé communément «soude légère») obtenu par le procédé de fabrication de la soude à l'ammoniaque convient mal et il est habituel de le soumettre à un traitement de conversion en carbonate de sodium anhydre dense (ou «soude dense») (Te-Pang Hou. «The manufacture of soda» – deuxième édition – 1969 – Hafner Publishing Company).

Le carbonate de sodium anhydre léger est généralement obtenu par calcination de bicarbonate de sodium. On a déjà proposé divers procédés pour le convertir en carbonate de sodium anhydre dense, mais aucun de ces procédés n'a permis, jusqu'à présent, d'obtenir, de manière économique, du carbonate de sodium anhydre dense de bonne qualité.

On a notamment proposé de traiter du carbonate de sodium anhydre léger avec de l'eau à une température d'environ 90° C pour cristalliser du carbonate de sodium monohydraté, puis de chauffer les cristaux de carbonate de sodium monohydraté à haute température (140 à 180°C) pour les convertir en carbonate de sodium anhydre (Dr. Ing. Z. Rant – «Die Erzeugung von Soda» – 1968 – Ferdinand Enke Verlag, Stuttgart – pages 300 à 303). Ce procédé connu présente l'inconvénient de nécessiter plusieurs étapes opérationnelles comprenant une cristallisation de carbonate de sodium monohydraté à basse température et une cristallisation subséquente de carbonate de sodium anhydre à haute température. Cette succession d'opérations industrielles implique un appareillage coûteux. L'obtention de carbonate de sodium anhydre dense de qualité optimum, uniforme et constante est par ailleurs rendue difficile, du fait que le procédé implique obligatoirement la formation d'un composé intermédiaire (carbonate de sodium monohydraté).

On a aussi proposé un procédé selon lequel on dissout du carbonate de sodium anhydre léger dans de l'eau ou une solution diluée de carbonate de sodium et on soumet la solution résultante à une évaporation à une température supérieure à la température de transition du carbonate de sodium monohydraté en carbonate de sodium anhydre (brevet US-A-1907987; brevet GB-A-443101). Ce procédé connu présente l'inconvénient d'impliquer une évaporation, qui le rend onéreux.

L'invention vise à remédier aux inconvénients des procédés connus qui viennent d'être décrits, en fournissant un procédé nouveau qui permet d'obtenir de manière économique et aisée, du carbonate de sodium anhydre dense de bonne qualité, directement à partir de carbonate de sodium anhydre léger.

En conséquence, l'invention concerne un procédé pour la fabrication de carbonate de sodium anhydre dense, selon lequel on ajoute du carbonate de sodium anhydre léger à une solution aqueuse de carbonate de sodium et on traite le liquide résultant dans un domaine de températures supérieures à la température de transition du carbonate de sodium monohydraté en carbonate de sodium anhydre; selon l'invention, on met en œuvre une solution aqueuse saturée de carbonate de sodium, on opère l'addition du carbonate de sodium anhydre léger à ladite solution dans le domaine de températures précité et on soumet la suspension aqueuse résultante à un traitement de mûrissage dans ce domaine de températures.

Dans le procédé selon l'invention, on entend désigner par carbonate de sodium anhydre dense, des cristaux de carbonate de sodium anhydre présentant une masse volumique apparente à l'écoulement au moins égale à 0,70 kg/dm³.

La masse volumique apparente à l'écoulement est, par définition, la masse de 1 dm³ de matière en vrac, non comprimée, mesurée par la méthode décrite dans le traité précité de Te-Pang Hou, «Manufacture of Soda», page 486.

On entend désigner par carbonate de sodium anhydre léger, du carbonate de sodium anhydre qui se présente à l'état de particules mal cristallisées, dont la masse volumique apparente est inférieure à celle du carbonate de sodium anhydre dense que l'on cherche à produire. Le carbonate de sodium anhydre léger est généralement obtenu par calcination de bicarbonate de sodium, par exemple celui recueilli à l'issue du procédé de fabrication de la soude à l'ammoniaque, et sa masse volumique apparente est alors généralement comprise entre 0,30 et 0,70 kg/dm³, habituellement inférieure à 0,60 kg/dm³.

Dans le procédé selon l'invetion, le carbonate de sodium anhydre léger est mélangé à une solution aqueuse saturée de carbonate de sodium, à une température ou dans un domaine de températures supérieures à la température de transition du carbonate de sodium monohydraté en carbonate de sodium anhydre. On choisit habituellement un domaine de températures supérieures d'au moins 2° C à ladite température de transition, par exemple comprises entre 3 et 20° C au-dessus de cette température de transition. La température de transition du carbonate de sodium monohydraté en carbonate de sodium anhydre étant voisine de 107° C, il convient éventuellement de travailler sous une pression supérieure à la pression atmosphérique normale, pour éviter une ébullition de la solution aqueuse de cabonate de sodium.

Les poids relatifs de carbonate de sodium anhydre léger et de la solution saturée de carbonate de sodium ne sont pas critiques en principe, les valeurs optimum étant définies par la recherche du meilleur compromis entre une haute productivité et l'obtention d'une suspension aqueuse de cristaux dont la viscosité ne fasse pas obstacle à une décantation ou une filtration efficace. On peut par exemple régler ces poids relatifs de manière que la suspension aqueuse contienne au moins 20% en poids de carbonate de sodium anhydre solide, par exemple de 30 à 40% en poids.

L'addition du carbonate de sodium anhydre léger à la solution aqueuse saturée de carbonate de sodium peut être opérée par tout moyen adéquat. On peut avantageusement opérer cette addition dans une zone de la solution, où on engendre un vortex, comme exposé dans le brevet EP-A 73085 (SOLVAY & Cie.).

Le traitement de mûrissage consiste à maintenir la suspension aqueuse de carbonate de sodium dans le domaine de températures précité pendant un temps suffisant pour provoquer une recristallisation du carbonate de sodium anhydre léger. Toutes autres choses égales, la durée du traitement de mûrissage dépend de divers facteurs, notamment du domaine de températures sélectionné, des quantités relatives de carbonate de sodium anhydre léger et de solution aqueuse saturée mises en œuvre et de la masse volumique apparente du carbonate de sodium anhydre léger. Il doit être recherché dans chaque cas particulier, ce qui peut être réalisé aisément par un travail de routine de laboratoire, par exemple en prélevant périodiquement des échantillons de carbonate de sodium solide de la suspension et en mesurant leur masse spécifique apparente.

On peut par exemple fixer la durée du traitement de mûrissage à environ 20 minutes ou davantage. En principe, il n'y a pas de limite maximum dans la durée du traitement de mûrissage mais, en pratique, pour des considérations économiques, on n'a pas intérêt à ce qu'il s'éternise inutilement. Des durées inférieures à 30 heures conviennent généralement dans tous les cas.

A l'issue du traitement de mûrissage, on extrait les cristaux de carbonate de sodium anhydre de la suspension aqueuse. A cet effet, on soumet généralement la suspension à une filtration que l'on peut éventuellement faire précéder d'une sédimentation par gravité ou par centrifugation. Elle est de préférence suivie d'un séchage des cristaux recueillis. L'extraction des cristaux de la suspension et leur séchage sont de préférence opérés dans le domaine de températures précité, pour éviter que du carbonate de sodium monohydraté se forme.

Dans une autre forme de réalisation de l'invention, destinée également à raccourcir la durée du traitement de mûrissage, on incorpore des germes cristallins de carbonate de sodium anhydre dense à la solution aqueuse saturée de carbonate de sodium. Toutes autres choses égales, l'influence des germes cristallins sur la durée du traitement de mûrissage est d'autant plus prononcée que les germes sont de petites dimensions. En général, on recommande d'utiliser des germes cristallins dont le diamètre moyen n'excède pas 0,10 mm, par exemple des germes dont le diamètre moyen est compris entre 0,010 et 0,080 mm. Les germes peuvent être obtenus par tout moyen adéquat, par exemple en évaporant une solution aqueuse saturée de carbonate de sodium au-dessus de la température de transition précitée ou en chauffant des cristaux de carbonate de sodium monohydraté au-dessus de cette température. On préfère toutefois, suivant une variante avantageuse de cette forme d'exécution de l'invention, recycler une partie des cristaux de carbonate de sodium anhydre dense recueillis à l'issue de mûrissage.

Dans une forme de réalisation spécialement avantageuse du procédé selon l'invention, on met en œuvre une solution aqueuse de carbonate de sodium, qui contient du chlorure de sodium ou de l'hydroxyde de sodium dissous, comme suggéré dans les brevets GB-A-443101 et US-A-2133455, pour élever sa température d'ébullition et abaisser la température de transition du carbonate de sodium monohydraté en carbonate de sodium anhydre. On utilise avantageusement des solutions aqueuses contenant au moins 5%, de préférence plus de 15% en poids de chlorure ou d'hydroxyde de sodium. Des solutions contenant plus de 20% en poids de chlorure ou d'hydroxyde de sodium ont permis d'exécuter le procédé à la pression atmosphérique normale.

Le procédé selon l'invention peut être exécuté de manière discontinue ou de manière continue.

Dans le cas d'un procédé discontinu, la solution aqueuse de carbonate de sodium peut être obtenue en dissolvant du carbonate de sodium dans de l'eau.

Dans le cas préféré où le procédé selon l'invention est exécuté de manière continue, l'eau-mère séparée des cristaux de carbonate de sodium à l'issue du mûrissage est utilisée telle quelle pour former la solution aqueuse saturée de carbonate de sodium. Dans cette forme de réalisation de l'invention, l'eau-mère est par exemple maintenue en permanence dans le domaine de températures précité et on exécute des cycles successifs d'opérations comprenant successivement l'ajout de carbonate anhydre léger à l'eau-mère, le traitement de mûrissage de la suspension aqueuse et l'extraction des cristaux de carbonate de sodium anhydre de la suspension.

Dans le cas où l'ajout du carbonate de sodium anhydre léger et le traitement de mûrissage sont exécutés sous pression, on préfère parfois soumettre la suspension aqueuse à une détente jusqu'à la pression atmosphérique, avant d'en extraire les cristaux de carbonate de sodium anhydre dense. Dans cette variante de l'invention, l'extraction des cristaux de la suspension et leur séchage subséquent doiveent être opérés sans tarder après la détente, pour éviter leur hydratation.

Le procédé selon l'invention permet d'obtenir, de manière aisée et économique, du carbonate de sodium anhydre dense dont la masse volumique est au moins égale à 0,70 kg/dm³ et habituellement supérieure à 1 kg/dm³.

Des particularités et détails de l'invention vont apparaître au cours de la description suivante des dessins annexés qui montrent les schémas de quelques formes de réalisation du procédé selon l'invention.

La figure 1 représente le schéma de principe d'une première forme d'exécution générale du procédé selon l'invention.

La figure 2 représente le schéma d'une variante d'exéction du procédé de la figure 1.

Dans ces figures, des mêmes notations de référence désignent des éléments identiques.

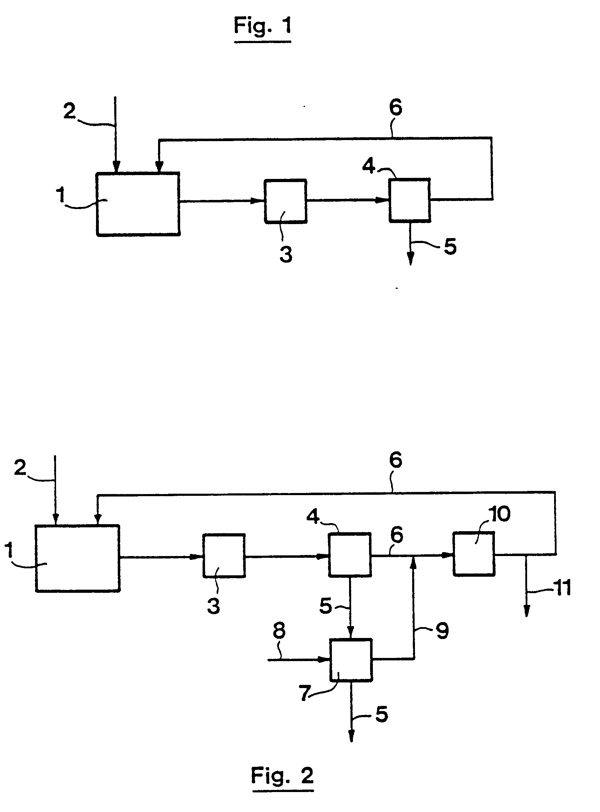

Dans l'exécution du procédé selon l'invention, conformément au schéma de la figure 1, on maintient une solution saturée de carbonate de sodium dans un cristalliseur (1), à une température supérieure à la température de transition du carbonate de sodium monohydraté en carbonate de sodium anhydre (approxmativement 107° C). On y fait régner une pression suffisante, supérieure à la pression atmosphérique, pour éviter une ébullition de la solution. On ajoute à celle-ci, dans le cristalliseur (1), des cristaux de carbonate de sodium anhydre léger (2); ceux-ci sont par exemple obtenus par calcination de bicarbonate de sodium fabriqué par le procédé à l'ammoniaque. La suspension de carbonate de sodium est soumise à un traitement de mûrissage dans le cristalliseur (1), pendant un temps suffisant pour permettre une recristallisation du carbonate de sodium.

A l'issue du traitement de mûrissage, la suspension aqueuse est extraite du cristalliseur (1) et envoyée successivement dans une chambre de détente (3) où elle est ramenée à la pression atmosphérique normale, puis dans un appareil de centrifugation (4) où on extrait les cristaux de carbonate de sodium dense (5) qu'elle contient. Ceux-ci sont éventuellement transférés ensuite dans un sécheur, non représenté. L'eau-mère (6) de la cristallisation recueillie de l'appareil de centrifugation (4) est envoyée telle quelle dans le cristalliseur (1) pour y reconstituer la solution saturée de carbonate de sodium de départ.

La variante d'exécution du procédé, schématisée à la figure 2, s'applique spécialement à la mise en œuvre de carbonate de sodium anhydre léger (2) contaminé par du chlorure de sodium; c'est habituellement le cas du carbonate de sodium anhydre obtenu par calcination du bicarbonate de sodium fabriqué par le procédé à l'ammoniaque.

Dans le procédé selon la figure 2, on exécute l'ensemble des opérations décrites ci-dessus en référence à la figure 1 et les cristaux de carbonate de sodium anhydre dense (5) sont transférés dans une chambre (7) où on les soumet à un lavage au moyen d'un courant d'eau (8), avant de les transférer au sécheur, non représenté. Le courant d'eau (9) recueilli de la chambre de lavage (7) contient du carbonate de sodium et du chlorure de sodium dissous; il est mélangé au courant d'eau-mère (6) et la solution diluée résultante est transférée dans une chambre de détente (10) où on l'évapore partiellement jusqu'à ce qu'elle soit saturée en carbonate de sodium, avant de la recycler dans le cristalliseur (1).

Lorsque le procédé selon la figure 2 est exécuté de manière continue, il est nécessaire de soutirer périodiquement ou en continu un courant de purge (11), pour conserver dans le cristalliseur (1) une teneur constante en chlorure de sodium.

Selon une autre variante du procédé de la figure 1, non représentée, la solution aqueuse saturée de carbonate de sodium mise en œuvre dans le cristalliseur (1) contient environ 20% en poids de chlorure ou d'hydroxyde de sodium dissous. Une telle solution présente la particularité d'avoir son point d'ébullition, à la pression atmosphérique normale, supérieur à la température de transition du carbonate de sodium monohydraté en carbonate de sodium anhydre. Cette variante du procédé selon l'invention permet ainsi de s'affranchir de la chambre de détente (3).

Les examples d'application suivants vont expliciter l'invention.

Exemple 1

Dans un cristalliseur de laboratoire, on a introduit successivement 439 g de carbonate de sodium anhydre léger et 2,490 kg d'une solution aqueuse saturée de carbonate de sodium, contenant, par kg, 173,4 g de carbonate de sodium et 102,0 g de chlorure de sodium. Le carbonate de sodium anhydre léger mis en œuvre a été obtenu par calcination de bicarbonate de sodium produit dans une installation industrielle de fabrication de la soude à l'ammoniaque. Sa masse volumique apparente était inférieure à 0,600 kg/dm³.

Immédiatement après avoir introduit le carbonate de sodium anhydre léger et la solution aqueuse dans le cristalliseur, on a rapidement chauffé le mélange pour le porter à 120° C en moins de 3 heures, de manière à éviter une hydratation substantielle du carbonate de sodium anhydre et à réaliser ainsi une fonction équivalente à celle consistant à ajouter le carbonate de sodium anhydre léger à la solution saturée préalablement préchauffée à 120° C. Simultanément, on a réalisé dans le cristalliseur une pression supérieure à 1,7 bar, pour éviter une ébullition de la solution aqueuse. Le cristalliseur a ensuite été maintenu à cette température et cette pression pendant 20 heures, le mélange y étant soumis à une légère agitation pour le maintenir homogène. A l'issue de ce traitement de mûrissage, le contenu du cristalliseur a été transféré sur un filtre en polytétrafluoroéthylène, tout en étant maintenu à la pression et à la température précitées. Les cristaux de carbonate de sodium, recueillis sur le filtre, ont été lavés avec de l'alcool méthylique, à la température ambiante, puis séchés sous vide. Ils présentaient les caractéristiques suivantes:
Composition pondérale:
$Na_2CO_3$ : 994,3 g/kg
$Na_2CO_3 \cdot H_2O$ : 5,5 g/kg
NaCl : 0,2 g/kg

Diamètre moyen des particules: 0,22 mm
Masse volumique apparente à l'écoulement: 1,06 kg/dm³.

Exemple 2

Cet exemple est destiné à faire apparaître l'intérêt d'utiliser une solution aqueuse de carbonate de sodium contenant plus de 20% en poids de chlorure de sodium.

A cet effet, on a répété les étapes opératoires de l'essai de l'exemple 1, en utilisant 445 g de carbonate de sodium anhydre léger et 2,525 kg d'une solution aqueuse saturée de carbonate de sodium, contenant, par kg, 94,6 g de carbonate de sodium et 220,0 g de chlorure de sodium. Le chauffage du mélange, le traitement de mûrissage et la filtration ont été opérés à 105° C, sous la pression atmosphérique normale. Les cristaux recueillis à l'issue du séchage présentaient les caractéristiques suivantes:

Composition pondérale :

$Na_2CO_3$ : 999,7 g/kg
$Na_2CO_3.H_2O$ : 0,0 g/kg
NaCl : 0,3 g/kg

Diamètre moyen des particules: 0,15 mm
Masse volumique apparente à l'écoulement: 0,79 kg/dm³.

**Revendications**

1. Procédé pour la fabrication de carbonate de sodium anhydre dense, selon lequel on ajoute du carbonate de sodium anhydre léger (2) à une solution aqueuse de carbonate de sodium (6) et on traite le mélange résultant (1) dans un domaine de température supérieures à la température de transition de carbonate de sodium monohydraté en carbonate de sodium anhydre, caractérisé en ce qu'on met en œuvre une solution aqueuse saturée de carbonate de sodium (6), on opère l'addition du carbonate de sodium anhydre léger (2) à ladite solution dans le domaine de températures précité et on soumet la suspension aqueuse résultante à un traitement de mûrissage dans ce domaine de températures.

2. Procédé selon la revendication 1, caractérisé en ce qu'on sélectionne un domaine de températures comprises entre 3 et 20° C au-dessus de la température de transition susdite.

3. Procédé selon la revendication 1 ou 2, caractérisé en ce que la quantité de carbonate de sodium anhydre léger (2) mise en œuvre est réglée de manière que la suspension aqueuse précitée (1) contienne au moins 20% en poids de carbonate de sodium anhydre solide.

4. Procédé selon la revendication 3, caractérisé en ce que la quantité de carbonate de sodium anhydre léger (2) mise en œuvre est réglée de manière que la suspension aqueuse précitée (1) contienne entre 30 et 40% en poids de carbonate de sodium anhydre solide.

5. Procédé selon l'une quelconque des revendications 1 à 4, caractérisé en ce qu'on exécute le traitement de mûrissage pendant au moins 20 minutes.

6. Procédé selon l'une quelconque des revendications 1 à 5, caractérisé en ce qu'on met en œuvre une solution aqueuse de carbonate de sodium (6) contenant, en suspension, des cristaux de carbonate de sodium anhydre dense.

7. Procédé selon l'une quelconque des revendications 1 à 6, caractérisé en ce qu'on met en œuvre une solution aqueuse saturée de carbonate de sodium (6), qui contient au moins 200 g de chlorure de sodium par kg.

8. Procédé selon l'une quelconque des revendications 1 à 7, caractérisé en ce qu'on utilise, pour la solution aqueuse précitée de carbonate de sodium (6), une partie au moins de l'eau-mère séparée des cristaux de carbonate de sodium (5) à l'issue du traitement de mûrissage.

9. Procédé selon l'une quelconque des revendications 1 à 8, caractérisé en ce qu'on met en œuvre du carbonate de sodium anhydre léger (2) obtenu par calcination de bicarbonate de sodium.

**Patentansprüche**

1. Verfahren zum Herstellen von dichtem, wasserfreiem Natriumcarbonat, nach dem man leichtes wasserfreies Natriumcarbonat (2) einer wäßrigen Lösung von Natriumcarbonat (6) zugibt und die resultierende Mischung (1) in einem Temperaturbereich oberhalb der Übergangstemperatur von Natriumcarbonat-Monohydrat zu wasserfreiem Natriumcarbonat behandelt, dadurch gekennzeichnet, daß man eine gesättigte wäßrige Lösung von Natriumcarbonat (6) einsetzt, die Zugabe von leichtem, wasserfreiem Natriumcarbonat (2) zu der Lösung in dem obenerwähnten Temperaturbereich bewirkt und die resultierende wäßrige Suspension einer Reifungsbehandlung in diesem Temperaturbereich unterzieht.

2. Verfahren nach Anspruch 1, dadurch gekennzeichnet, daß man einen Temperaturbereich zwischen 3 und 20° C oberhalb der oben erwähnten Übergangstemperatur auswählt.

3. Verfahren nach Anspruch 1 oder 2, dadurch gekennzeichnet, daß die Menge des eingesetzten leichten wasserfreien Natriumcarbonats (2) auf die Weise geregelt wird, daß die oben erwähnte wäßrige Suspension (1) mindestens 20 Gew.-% festes wasserfreies Natriumcarbonat enthält.

4. Verfahren nach Anspruch 3, dadurch gekennzeichnet, daß die Menge des eingesetzten leichten, wasserfreien Natriumcarbonats (2) auf die Weise reguliert wird, daß die oben erwähnte wässrige Suspension (1) zwischen 30 und 40 Gew.-% an festem, wasserfreiem Natriumcarbonat enthält.

5. Verfahren nach einem der Ansprüche 1 bis 4, dadurch gekennzeichnet, daß man die Reifungsbehandlung während mindestens 20 Minuten ausführt.

6. Verfahren nach einem der Ansprüche 1 bis 5, dadurch gekennzeichnet, daß man eine wäßrige Lösung von Natriumcarbonat (6), die, in Suspension, Kristalle von dichtem, wasserfreiem Natriumcarbonat enthält, einsetzt.

7. Verfahren nach einem der Ansprüche 1 bis 6, dadurch gekennzeichnet, daß man eine wäßrige, gesättigte Natriumcarbonat Lösung (6) einsetzt, die mindestens 200 g Natriumchlorid pro kg enthält.

8. Verfahren nach einem der Ansprüche 1 bis 7, dadurch gekennzeichnet, daß man für die oben erwähnte wäßrige Natriumcarbonatlösung (6) mindestens einen Teil der Mutterlauge verwendet, die von den Natriumcarbonatkristallen (5) am Schluß der Reifungsbehandlung abgetrennt wurde.

9. Verfahren nach einem der Ansprüche 1 bis 8, dadurch gekennzeichnet, daß man leichtes wasserfreies Natriumcarbonat (2), das durch Kalzinieren von Natriumbicarbonat erhalten wurde, einsetzt.

## Claims

1. Process for manufacturing dense anhydrous sodium carbonate, according to which light anhydrous sodium carbonate (2) is added to an aqueous sodium carbonate solution (6) and the resulting mixture (1) is treated within a temperature range above the transition temperature of sodium carbonate monohydrate to anhydrous sodium carbonate, characterized in that a saturated aqueous sodium carbonate solution (6) is employed, the addition of the light anhydrous sodium carbonate (2) to the said solution is performed within the abovementioned temperature range and the resulting aqueous suspension is subjected to a maturing treatment within this temperature range.

2. Process according to Claim 1, characterized in that a range of temperatures between 3 and 20° C above the abovementioned transition temperature is selected.

3. Process according to Claim 1 or 2, characterized in that the amount of light anhydrous sodium carbonate (2) employed is adjusted so that the abovementioned aqueous suspension (1) contains at least 20% by weight of solid anhydrous sodium carbonate.

4. Process according to Claim 3, characterized in that the amount of light anhydrous sodium carbonate (2) employed is adjusted so that the abovementioned aqueous suspension (1) contains between 30 and 40% by weight of solid anhydrous sodium carbonate.

5. Process according to any one of Claims 1 to 4, characterized in that the maturing treatment is carried out for at least 20 minutes.

6. Process according to any one of Claims 1 to 5, characterized in that aqueous sodium carbonate solution (6) containing suspended crystals of dense anhydrous sodium carbonate is employed.

7. Process according to any one of Claims 1 to 6, characterized in that saturated aqueous sodium carbonate solution (6) which contains at least 200 g of sodium chloride per kg is employed.

8. Process according to any one of Claims 1 to 7, characterized in that at least a portion of the mother liquor separated from the sodium carbonate crystals (5) at the end of the maturing treatment is used for the abovementioned aqueous sodium carbonate solution (6).

9. Process according to any one of Claims 1 to 8, characterized in that light anhydrous sodium carbonate (2) obtained by calcination of sodium bicarbonate is employed.

## Fig. 1

## Fig. 2